# EUROPEAN PATENT APPLICATION

(11) **EP 1 972 556 A1**
(43) Date of publication of application: **24.09.2008**
(21) Application number: 07425156.2
(22) Date of filing: 19.03.2007
(51) Int. Cl.: B65B 25/04, B65G 47/88

(54) **An article aligning device, in particular for fruit produce, and a machine for packaging the articles comprising the aligning device**

(71) Applicant: B. Longobardi Srl., 39011 Lana (Bolzano) (IT)
(72) Inventor: Longobardi, Robert, 39011 Lana (Bolzano) (IT)
(74) Representative: Gotra, Stefano

(57) **Abstract**

An aligning device (1) for articles (3), in particular for vegetable and fruit produce advancing along an advancement line (11) of a machine (2) for packaging the articles (3) in celled trays (5). The device (1) comprises a barrier (19) which is mobile between a non-operative position in which the articles (3) are free to proceed along a sliding plane (11b) of the advancement line (11), and an operative position, in which the barrier (19) blocks the advancement of the articles (3) along the advancement line (11), interrupting supply of the articles (3).

## Description

The invention relates to an aligning device, in particular for vegetable and fruit produce.

The invention also relates to a machine for packaging articles provided with the aligning device.

The present invention relates to the industrial sector of machines, plants and/or devices for working, processing and packaging vegetable and fruit products destined for large-scale distribution.

In particular the invention relates to packing articles of vegetable and fruit and/or fruit produce such as for example moderate-sized fruits of a nearly-spherical type (apples, oranges, mandarin oranges and the like) in special crates.

As is known, packing fruit, and in particular apples, in crates is generally done using special trays made of a flexible material or a non-flexible material provided with a plurality of cells for ordered housing of the fruit to be packed.

Generally, machines are known in which the packing of the apples is done by special machines comprising a combined line advancement system for the fruit, trays and crates, each of which lines is supplied by a respective loading station.

Usually the fruit advancing lines and the celled trays are superposed and converge at a terminal zone of the advancement line of the fruit, so that the fruit is arranged by force of gravity onto the underlying cells of the trays. The advancement line of the trays extends beyond the convergence zone to constitute a further advancement line dedicated to the advancing of the trays filled with the supplied fruit.

Similarly to the above-described structure, the advancement line of the filled trays superposes the advancement line of the containing crates up to a convergence zone corresponding to a terminal zone of the advancement line of the filled trays.

When the filled trays reach the zone of convergence, between the corresponding advancement line and the advancement line of the crates, the trays bearing the fruit are eased into the containing crates, which continue towards an outlet conveyor.

With reference to the arranging of the fruit in the cells of the trays supplied along the first advancement line, the Applicant has noted that the prior art is not free of drawbacks and is susceptible to improvement, as regards a correspondence between the fruit deposited and the number of cells to be filled, as well as in relation to the packing costs involved due -to the necessary presence of one or more persons to keep control of and to gather up the fruit in excess being supplied to the cells.

In particular the Applicant has observed that the positioning of the fruit by force of gravity in the trays causes, apart from the expected automatic arrangement of the fruits in the cells, the undesired positioning of the fruits between one tray and a next; as the trays advance consecutively, one after another, substantially flat zones are defined, on which the excess fruit goes to rest.

Normally this drawback is obviated by the action of at least one operative who constantly controls the progress of the cell-filling operations and removes the fruit that ends up in wrong places. Naturally the necessary presence of a dedicated operative who does only the above-described job has a considerable effect on the overall fruit packaging costs.

The aim of the present invention is to resolve the problems encountered in the prior art.

A further aim of the invention is to provide an aligning device which is able to interrupt the advancing of the fruit when an empty tray reaches the convergence zone between the tray advancement line and the fruit advancement line; the aligning device prevents the fruit from sliding between a tray and a next tray, or from lying on flat zones of trays not exhibiting cells.

A further aim of the present invention is to reduce the packaging costs normally associated to the filling of celled trays.

The technical objective and the specified aims are substantially attained by the aligning device for articles, in particular vegetable and fruit articles advancing along a predetermined advancement line, which device comprises the characteristics expressed in the characterising part of claim 1.

The technical objective is attained by a machine for packaging articles, in particular vegetable and fruit articles, comprising the characteristics expressed in claim 11.

Further characteristics and advantages will better emerge from the detailed description that follows of a preferred though not exclusive embodiment of a device for aligning articles, in particular vegetable and fruit produce, which are advancing along a predetermined advancement line, as well as a machine for packaging the above-mentioned articles provided with the device, in agreement with the present invention. The invention will be described herein below with reference to the accompanying figures of the drawings, which are provided by way of non-limiting example, and in which:
Figure 1 is a perspective view of a machine for packaging articles, in particular vegetable and fruit articles, provided with an aligning device in agreement with the present invention;
Figure 2 is a perspective view from above of the device of figure 1, associated to a part of the machine;

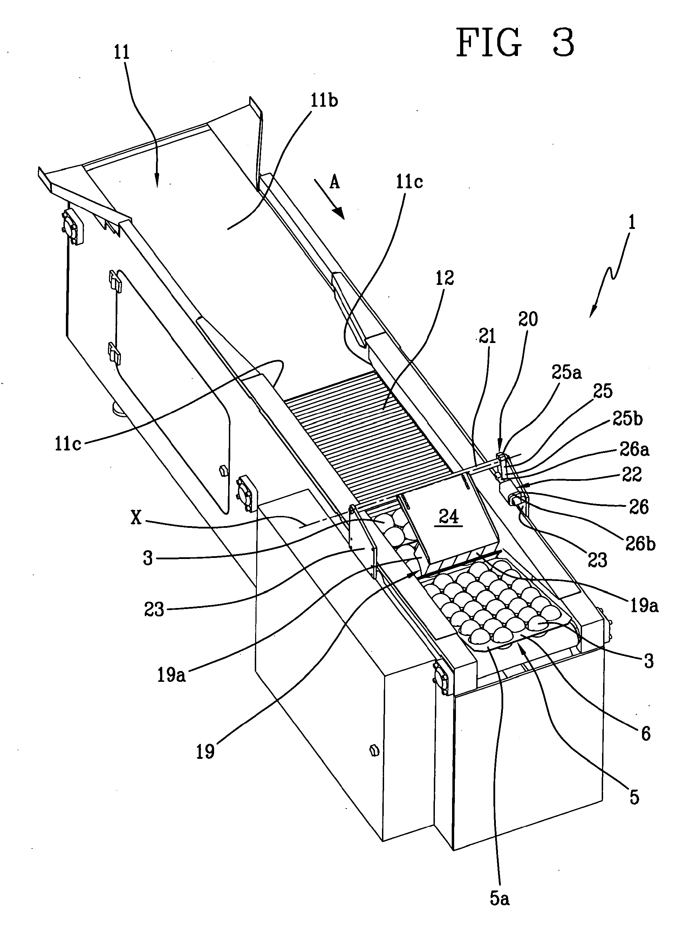

Figure 3 is a further perspective view from above of the device of the preceding figures, associated to a part of the machine;
Figure 4 is a schematic section of the device of the preceding figures, associated to a part of the machine.

With reference to the figures of the drawings, 1 denotes in its entirety a loading device for trays, in particular celled trays for vegetable and fruit products, in agreement with the present invention.

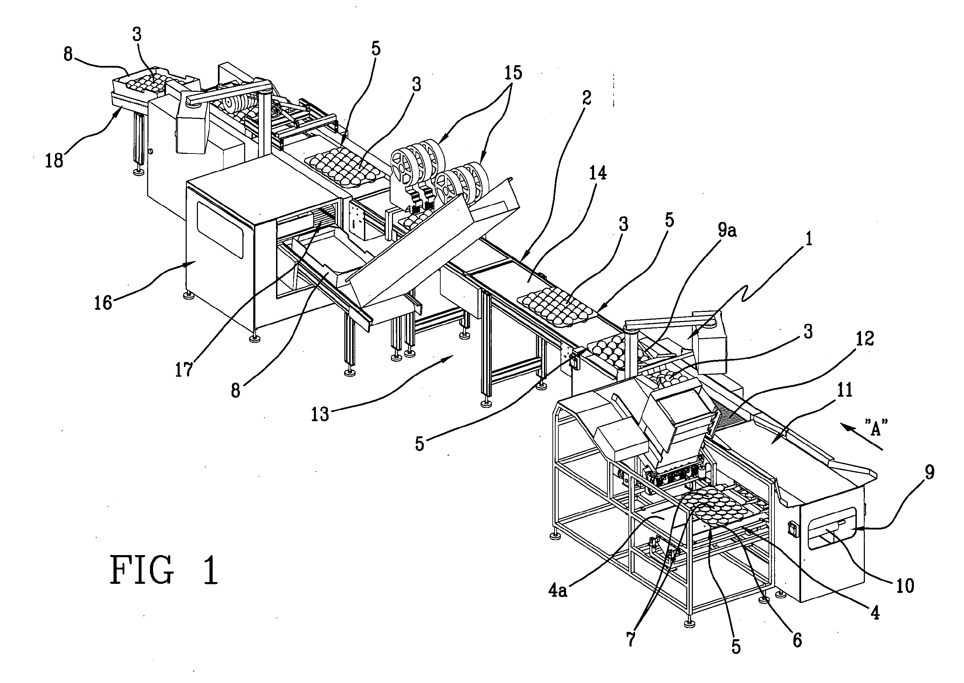

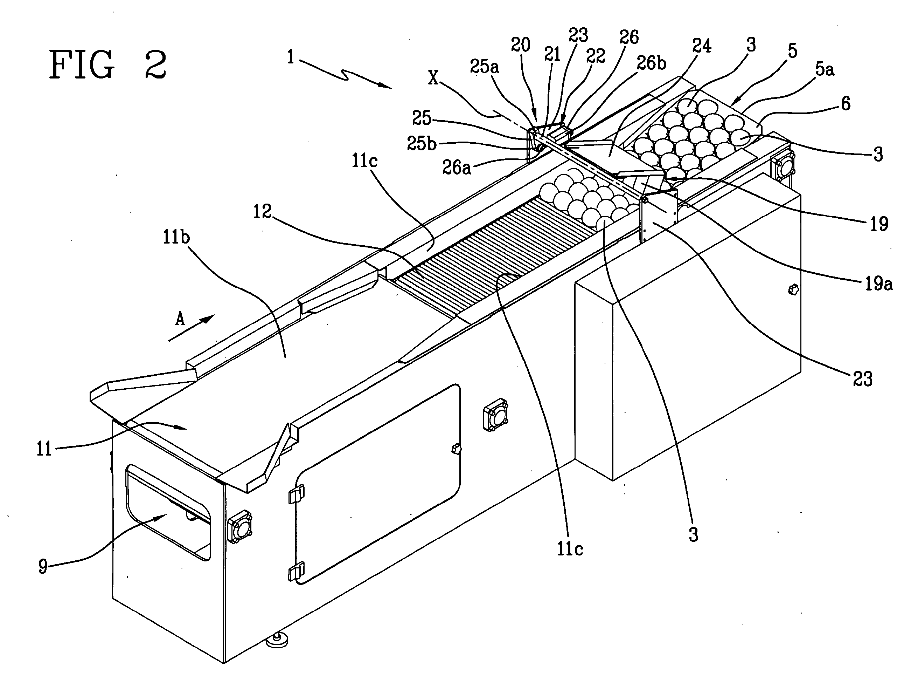

With reference to figure 1, 2 denotes a machine 2 for packing articles 3, in particular vegetables and fruits of overall modest size and being substantially spherical or rounded, such as apples, oranges, mandarin oranges and the like.

The machine 2 comprises a first loading station 4 for infeeding trays 5 each of which exhibits a structure 6 which is substantially flat, and at least a cell 7, advantageously a plurality of cells 7, for ordered housing of single vegetables or fruits 3 to be packed in special crates 8.

The first loading station 4 supplies the trays 5 to a first advancement line 9 which extends preferably by a side of the first loading station 4 along a substantially straight direction A which is the advancement direction of the trays 5. Advantageously the first advancement line 9 comprises at least a conveyor belt 10 which extends horizontally along the above-mentioned advancement direction A. Naturally, the first advancement line 9 can be realised using any other conveyor suitable for advancement of the trays 5. The machine 2 comprises a second loading station (not illustrated in the figures of the drawings) which is deputed to supplying the above-mentioned vegetables or fruits 3 to be placed in the cells 7 of the trays 5. The second loading station provides a continuous supply of fruits 3 to be packed to a second advancement line 11 which extends preferably in a substantially straight direction, advantageously coinciding with the advancement direction A of the trays 5 along the first advancement line 9. The second advancement line 11 is preferably superposed on the first advancement line 9 so that the fruit articles proceed, substantially parallel, above the trays 5.

In the embodiment illustrated in figure 1, the second advancement line 11 includes the use of a conveyor 12, partially constituted by rollers, which develops horizontally above the conveyor belt 10 of the first advancement line 9, to facilitate the advancement of the fruits 3 launched from the second loading station.

The first and second advancement lines 9, 11, converge to one another along the advancement direction A in order to perform the housing of the fruits 3 in the cells 7 of the trays 5 being supplied.

In particular, the first advancement line 9 exhibits an inclined tract 9a which develops from the belt 10 and terminates approximately at the same level as the roller conveyor 12 of the second advancement line 11.

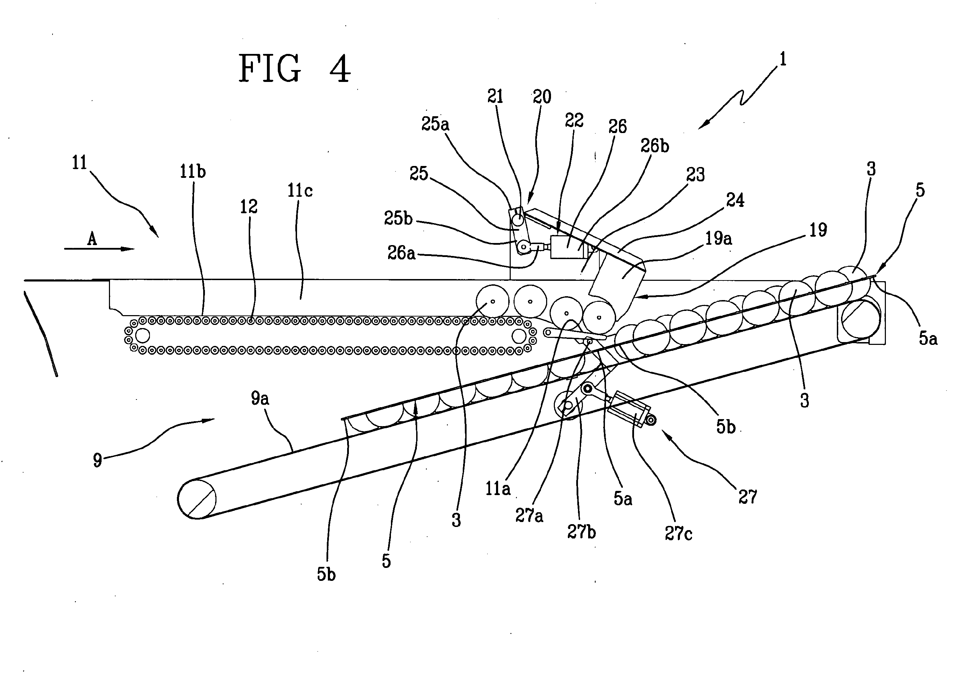

In order better to define the convergence zone of the above-mentioned advancement lines 9, 11, it is preferable that the second advancement line 11 terminates with a slide portion 11a (figure 4a) inclined towards the first advancement line 9, approximately at the inclined tract 9a thereof.

As can be seen in figure 4, the slide portion 11 a is hinged to the structure of the machine 2 above the inclined tract 9a of the first advancement line 9 at a terminal zone of the second line 11. In this way, as the slide portion 11 a is free to rotate about the hinge axis thereof, it rests, by force of gravity and due to the weight of the advancing articles 3, on the trays which advance inferiorly. The slide portion 11 a is preferably constituted by a plurality of elongate elements hinged at an end about a same hinge axis.

The structural configuration of the convergence zone of the first and second advancement lines 9, 11, determines the rising of the trays 5 and the contemporaneous descent of the fruits 3 which are the arranged in an ordered way internally of the cells 7 of the trays 5.

Still with reference to figure 1, the machine 2 comprises a first outlet line 13, preferably constituted by a conveyor belt 14 which extends from the conveying zone of the first and the second advancement lines 9, 11 along direction A, for the advancing of the trays 5 bearing the supplied articles 3.

In more detail, the first outlet line 13 constitutes a substantially horizontal prolongation of the first advancement line 9 from the inclined tract thereof. Labelling devices 15 are advantageously provided along the first outlet line 13 which apply a label on each article 3 borne in the trays 5, which labels might be for recognition of the produce being packaged.

The first outlet line 13 extends beyond the labelling devices 15 by the side of a third loading station 16 dedicated to the supply of the above-mentioned containing crates 8 for the trays 5.

In particular, the third loading station 16 supplies the crates 8 to a third advancement line 17, also preferably constituted by one or more roller conveyors, and extending prevalently along the advancement direction A.

Figure 1 shows how the third advancement line 17 develops inferiorly of the first outlet line 13 in order to enable a substantially parallel advancement of the crates 8 and the filled trays 5. Downstream of the third loading station 16 the third supply line 17 and the first outlet line 13 converge to one another in order to determine the positioning of each filled tray 5 inside a crate 8 coming from the third loading station 16.

In detail, the convergence zone between the first outlet line 13 and the third advancement line 17 is defined by an inclined terminal tract (not visible) which directs the filled trays 5 towards the crates 8 moving along the third advancement line 17.

From the convergence zone of the first outlet line 13 and the third advancement line 17 a second outlet line 18 extends for advancing the crates 8 with the filled trays 5, as illustrated.

In order to ensure correct positioning of the articles 3 in the cells 7 of the trays 5 being supplied, the second advancement line 11 of the machine 2 is provided with the above-mentioned aligning device 1 which intervenes to interrupt the advancing flow of the articles 3 as they reach the critical zones of the trays 5, i.e. the front end 5a and the back end 5b where there are substantially flat zone which are however able to support articles 3. As can be seen from the accompanying figures of the drawings, the aligning device 1 comprises at least a barrier element 19 which is mobile between a non-operative position in which the articles 3 are free to proceed along a substantially horizontal sliding plane 11b of the second advancement line 11, and an operative position, in which the barrier element 19 blocks the advancing of the articles 3 along the second advancement line 11. The device 1 is preferably operatively located superiorly of the sliding plane 11b of the second advancement line 11, at the point of the slide portion 11 a thereof, in order to interrupt the flow of articles 3 being supplied, immediately upstream of the convergence zone between the second advancement line 11 and the first advancement line 9.

The barrier element 19 is mobile between the non-operative and operative positions in a trajectory which extends transversally with respect to the sliding plane 11a of the second advancement line 11. The trajectory of the barrier element 19 advantageously extends in an arched motion, preferably an arc of a circle.

As can be seen in figures from 2 to 4, the barrier element 19 exhibits a structure which develops substantially perpendicular to the longitudinal development of the second advancement line 11, prevalently between respective opposite lateral sides 11c of the second advancement line 11 and substantially parallel to the sliding plane 11b, in order to obstruct the advancement of the articles 3 when the barrier element 19 is in the operative position.

In more detail, the barrier element 19 comprises a plurality of aligning modules 19a, preferably made of a substantially soft material in order not to damage the articles 3 in supply, arranged side-by-side in a transversal direction to the longitudinal development of the second advancement line 11. The aligning modules 19a are advantageously displaceable with respect to one another, transversally with respect to the longitudinal development of the second advancement line 11 in order to enable an adjustment of the barrier 19 against the articles 3 when the barrier element 19 is displaced into the operative position. In other words, the aligning modules 19a can be arranged along the transversal part of the sliding plane 11b of the second advancement line 11, preferably in relation to the size of the articles being supplied.

As illustrated in figures from 2 to 4, the device 1 further comprises means for moving 20 which are operatively associated to the barrier element 19 to move the barrier element 19 between the non-operative and operative positions. The means for moving 20 comprise at least a shaft 21 which develops substantially parallel to the sliding plane 11b of the second advancement line 11 and transversally, preferably perpendicularly, to the longitudinal development of the second advancement line 11. In other words, the shaft 21 transversally overlies the second advancement line 11 at a terminal zone thereof. The means for moving 20 further comprise at least a command organ 22 which is operatively associated to the shaft 21, which command organ 22 can be activated to rotate the shaft 21 about a longitudinal axis X thereof which is perpendicular to the advancement direction A. In more detail, the shaft 21 is rotatably supported by support elements 23, preferably plate-shaped, which can be fixed to the advancement line 11 at the opposite sides 11c thereof, while the barrier element 19 is engaged, via a suitable plate-shaped connecting element 24, to the shaft 21 in order to rotate solidly there-with about the longitudinal axis X thereof.

In agreement with the embodiment illustrated in the figures of the drawings, the command organ 22 comprises at least a command lever 25 exhibiting a first end 25a which is fixed to the shaft 21 and a second end 25b opposite the first end 25a. The command organ 22 further comprises at least a linear actuator 26 which is operatively interposed between the command lever 25 and one of the support elements 23. The linear actuator 26 exhibits a command rod 26a hinged to the second end 25b of the command lever 25, and a cylinder 26b hinged, on an opposite side to the command rod 26a, to the support element 23. The command rod 26a and the cylinder 26b are relatively mobile in order to determine an extension or a retraction of the linear actuator 26 and, consequently, to rotate the command lever 25 together with the shaft 21.

The device is advantageously provided with a support organ 27 which is operatively associated to the slide portion 11 a in order to near the slide portion 11 a to the barrier element 19 when the barrier element 19 is activated to move from the non-operative position into the operative position.

In more detail, the support organ 27 is mobile between a rest position in which it does not act on the slide portion 11 a and a support position, in which the support organ 27 acts on the slide element 11 a on the opposite side with respect to the barrier element 19 in order to distance the slide portion 11 a from the inclined tract 9a of the first advancement line 9 and keep it at a predetermined distance therefrom.

The support organ 27 preferably comprises at least a bar 27a which operates directly below the slide portion 11 a when the support organ 27 is in the support position, supported by arms 27b (only one of which is visible in figure 4) suitably hinged to the structure of the machine 2. The support organ 27 further comprises a linear actuator 27c which can rotate the arms 27b and consequently displace the bar between the rest position and the support position.

The device 1, described abave mostly from a structural point of view, functions as follows.

During the advancement of the trays 5 along the first advancement line 9 and the articles 3 along the second advancement line 11, the movement of the barrier element 19 is performed in synchrony with the detection in the convergence zones between the lines 9, 11 of consecutive trays 5. In particular, the trays 5 advancing in close-up positions such that each back end 5b is almost or actually in contact with the front end 5a of the following tray 5, are controlled by sensors (not illustrated as of known type) in order to move the barrier element 19 before the back end 5b of the tray 5 being filled is positioned below the terminal portion of the second advancement line 11.

In this situation, the linear actuator 26 is activated to extend and push the command lever 25 away from the cylinder 26b. As it is rigidly engaged to the shaft 21, the command lever 25 rotates together with the shaft 21 about the longitudinal axis X, inducing the connecting element 24 and the barrier element 19 to rotate. The barrier element 19 nears the sliding plane 11b of the second advancement line 11, inferiorly intercepting the advancing articles 3 which are consequently stopped before falling onto the inclined tract 9a of the first advancement line 9.

The short interruption of the flow of the articles 3 prevents them from falling between the trays 5 being filled and the following tray 5 still to be filled.

Once the tray 5 to be filled has been detected as being near to the terminal portion of the second advancement line 11, the linear actuator 26 is newly activated to draw the command lever 25 towards the cylinder 16b, the command lever 25, which rotates in the opposite direction to the previous rotation. The rotation of the command lever 25 causes the shaft 21 to rotate together with the connecting element 24-and the barrier element 19 which raises, enabling the articles 3 to advance; the articles 3 then fall by force of gravity into the cells 7 of the underlying tray 5.

The invention resolves the problems encountered in the prior art and attains the set aims.

Primarily, the object of the present invention enables a precise arrangement of the fruit in the cells of the trays, at the same time preventing the fruits from falling between one tray and a next or on flat non-celled zones of the tray 5.

On the one hand this enables a management of the supply flow of the fruit in accordance with the structural characteristics of the trays, as well as the arrangement of the trays along the advancement line; on the other hand it enables a considerable saving as it automates a process which is normally controlled by a person.

## Claims

1. An aligning device (1) for articles (3), in particular for vegetable and fruit produce advancing along an advancement line (11) of a machine (2) for packaging the articles (3), the aligning device (1) being **characterised in that** it comprises at least a barrier element (19) which is mobile between a non-operative position in which the articles (3) are free to proceed along a sliding plane (11b) of the advancement line (11) of the machine (2), and an operative position, in which the barrier element (19) blocks the advancement of the articles (3) along the advancement line (11).

2. The device of claim 1, wherein the barrier element (19) is mobile between the non-operative position and the operative position in a trajectory which extends transversally with respect to the sliding plane (11b) of the advancement line (11) of the machine (2).

3. The device of claim 2, wherein the trajectory of movement of the barrier element (19) extends in an arched direction, preferably an arc of a circle.

4. The device of any one of the preceding claims, wherein the barrier element (19) develops structurally transversally, preferably perpendicularly, to a longitudinal development of the advancement line (11) of the machine (2) and substantially parallel to the advancement line (11) in order to obstruct advancement of the articles (3) when the barrier element (19) is in the operative position.

5. The device of claim 4, wherein the barrier element (19) comprises a plurality of aligning modules (19a) located side-by-side and transversally with respect to the longitudinal development of the advancement line (11).

6. The device of claim 5, wherein the aligning modules (19a) are independently displaceable transversally to the longitudinal development of the advancement line (11) according to predetermined positions, preferably in relation to an overall size of the articles (3) advancing along the advancement line (11).

7. The device of any one of the preceding claims, wherein it comprises means for moving (20) which are operatively associated to the barrier element (19) in order to displace the barrier element (19) between the non-operative position and the operative position.

8. The device of claim 7, wherein the means for moving (20) comprise:
at least a shaft (21) developing substantially parallel to the sliding plane (11b) of the advancement line (11) and transversally, preferably perpendicularly, to the longitudinal development of the advancement line (11);
at least a command organ (22) operatively associated to the shaft (21) and activatable to rotate the shaft (21) about a longitudinal axis (X) thereof.

9. The device of claim 8, wherein the shaft (21) is rotatably engaged to respective support elements (23) fixable on the advancement line (11) at opposite sides thereof (11c), the barrier element (19) being engaged to the shaft (21) to rotate solidly there-with about the longitudinal axis (X).

10. The device of claim 8 or 9, wherein the command organ (22) comprises:
at least a command lever (25) exhibiting a first end (25a) fixed to the shaft (21) and a second end (25b) facing opposite the first end (25a);
at least a linear actuator (26) exhibiting a command rod (26a) hinged to the second end (25b) of the command lever (25), and a cylinder (26b) hinged, on an opposite side with respect to the command rod (26a), to a support element (23), the command rod (26a) and the cylinder (26b) being relatively mobile in order to rotate the command lever (26a) together with the shaft (21) about the longitudinal axis (X) thereof.

11. The device of at least one of the preceding claims, comprising a slide portion (11a) hinged to the structure of the machine (2) superiorly of the inclined tract (9a) of the first advancement line (9) at a terminal zone of the second advancement line (11), at least a support organ (27) being operatively associated to the slide portion (11a) to near the slide portion (11a) to the barrier element (19) when the slide portion (11a) is moved from the non-operative position to the operative position.

12. The device of claim 11, wherein the support organ (27) is mobile between a rest condition in which it does not act on the slide portion (11a) and a support position, in which the support organ (27) acts on the slide element (11a) on an opposite side with respect to the barrier element (19) in order to distance the slide portion (11a) from the inclined tract (9a) of the first advancement line (9) and keep the slide portion (11a) at a prefixed distance therefrom.

13. A machine (2) for packaging articles (3), in particular vegetable and fruit products, comprising:
a first loading station (4) for supplying trays (5) each of which trays (5) exhibits a substantially flat structure and exhibits at least a cell (7) for housing an article to be packed;
at least a first advancement line (9) of the trays (5) supplied by the first loading station (4);
a second loading station for supplying articles (3) to be placed on the trays (5);
a second advancement line (11) of the articles (3) supplied by the second loading station, the first advancement line (9) and the second advancement line (11) converging towards each other in order to determine a housing of the articles (3) in the tray (5);
a first outlet line (13) extending from a conveying zone constituted by the advancement lines (9, 11), for advancing the trays (5) housing the articles (3);
a third loading station (16) for supplying containing crates (8) for the trays (5);
a third advancement line (17) of the crates (8) supplied by the third loading station (16), the third advancement line (17) and the first outlet line (13) converging towards one another in order to place each tray (5) provided with the articles (3) internally of a respective crate (8);
a second outlet line (18) for advancing the crates (8) with the trays (5), **characterised in that** it further comprises at least an aligning device (1) according to any one of the preceding claims, operatively engaged to the second advancement line (11), upstream of a convergence between the second advancement line (11) and the first advancement line (9).
